# EUROPÄISCHE PATENTSCHRIFT

(11) **EP 2 913 625 B1**
(45) Veröffentlichungstag und Bekanntmachung des Hinweises auf die Patenterteilung: **11.01.2017**
(21) Anmeldenummer: 15154665.2
(22) Anmeldetag: 07.11.2011
(51) Int. Cl.: F41H 5/04, F41H 7/04, B32B 3/12

(54) **Laufboden für ein gepanzertes Fahrzeug, gepanzertes Fahrzeug mit einem derartigen Laufboden und Verfahren zur Herstellung eines derartigen Laufbodens**
Walking floor for an armored vehicle, armored vehicle having such a walking floor, and method for producing such a walking floor
Plancher intérieur pour un véhicule blindé, véhicule blindé pourvu dudit plancher intérieur et procédé de fabrication d'un plancher intérieur de ce type

(30) Priorität: 05.11.2010 DE 102010050566
(43) Veröffentlichungstag der Anmeldung: 02.09.2015
(62) Teilanmeldung aus: 11822796.6
(73) Patentinhaber: EC Technik GmbH, 54634 Bitburg (DE)
(72) Erfinder: Walter, Jürgen, 63110 Rodgau (DE); Alter, Rolf, Matthias, 6419 Echternach (DE)
(74) Vertreter: Bohnenberger, Johannes

(56) Entgegenhaltungen:
- EP-A1- 1 566 607
- EP-A2- 0 828 134
- DE-A1- 10 200 472
- DE-A1- 10 345 914
- DE-C1- 4 234 369
- US-A- 3 604 374

## Beschreibung

Die Erfindung bezieht sich auf einen Laufboden für ein gepanzertes Fahrzeug mit einem Doppelboden zum Schutz gegen Minenexplosionen, auf ein gepanzertes Fahrzeug mit einem derartigen Laufboden und auf ein Verfahren zur Herstellung eines derartigen Laufbodens.

Gepanzerte Fahrzeuge sind üblicherweise mit einem Doppelboden ausgerüstet, um den Schutz der Fahrzeuginsassen bei Minenexplosionen zu verbessern. Der untere, feindseitig angeordnete Boden, auch Minenschutzboden genannt, bildet dabei die Fahrzeugunterseite. Davon beabstandet ist freundseitig der Laufboden angeordnet, auf dem sich die Fahrzeuginsassen bewegen und stehen. Bei einer Minenexplosion verformt sich der untere Boden, d.h. der Minenschutzboden. Dadurch wird die Luft im Zwischenraum zwischen dem Minenschutzboden und dem Laufboden stark komprimiert und zwar im Millisekundenbereich, so dass ein starker Druckstoß auf den Laufboden wirkt. Dieser kann zu hochfrequenten Schwingungen im Laufboden führen, die so stark sein können, dass es dadurch zu Schienbeinfrakturen der auf dem Laufboden stehenden Soldaten kommt.

Ein gattungsgemäßer Laufboden ist beispielsweise aus EP 1 754 949 A1 bekannt, die ein gepanzertes Fahrzeug mit einer zum Minenschutz verstärkten Bodenkonstruktion offenbart. Der Laufboden in Form einer Innenbodenplatte ist mit Aussteifungselementen mit dem unteren Boden verbunden. Durch die mechanische Kopplung des Laufbodens mit dem unteren Boden besteht das Risiko, dass nicht nur der untere Boden, sondern auch der Laufboden bei der Detonation einer Mine verformt. Außerdem ist der bekannte Laufboden als Metallplatte ausgeführt, welche die bei der Explosion entstehenden Vibrationen ungedämpft auf die Soldaten überträgt.

EP 2 180 288 A2 offenbart eine Fußauflageplatte mit einem Deformationselement zum Schutz vor Minenexplosionen. Das Deformationselement umfasst mehrere Schenkel, die die Auflageplatte mit dem Boden verbinden. Die Schenkel verformen sich im Fall einer Detonation und absorbieren dabei Energie. Eine wirksame Vibrationsdämpfung ist hierdurch nicht möglich. Außerdem schützt die Fußauflageplatte nur einen räumlich sehr begrenzten Innenbereich des Fahrzeugs.

US 4,404,889 und WO 03/058151 A1 offenbaren Verbundplatten für die bodenseitige Panzerung militärischer Fahrzeuge zum Schutz vor Minendetonationen. Bei diesen Verbundplatten handelt es sich aber nicht um Laufböden, sondern um Platten für die Außenhülle eines gepanzerten Fahrzeuges, an die andere Anforderungen als an Laufböden gestellt werden. Aufgrund der in den Verbund integrierten Stahlplatten sind die bekannten Minenschutzböden schwer.

Die EP 1 566 607 A1 offenbart einen Laufboden gemäß dem Oberbegriff des Anspruchs 1.

Der Erfindung liegt die Aufgabe zu Grunde, einen Laufboden für ein gepanzertes Fahrzeug mit Doppelboden zu schaffen, wobei der Laufboden mit dem feindseitig angeordneten Minenschutzboden des gepanzerten Fahrzeuges kombinierbar ist und gute Dämpfungseigenschaften im Hinblick auf Vibrationen aufweist, die durch die Detonation einer Mine ausgelöst werden können. Der Erfindung liegt ferner die Aufgabe zu Grunde, ein gepanzertes Fahrzeug mit einem derartigen Laufboden sowie ein Verfahren zur Herstellung eines derartigen Laufbodens anzugeben.

Im Hinblick auf den Laufboden wird die Aufgabe durch den Gegenstand des Anspruchs 1 gelöst. Im Hinblick auf das gepanzerte Fahrzeug wird die Aufgabe durch den Gegenstand des Anspruchs 15 und im Hinblick auf das Herstellungsverfahren durch den Gegenstand des Anspruchs 19 gelöst.

Die Erfindung beruht auf dem Gedanken, einen Laufboden für ein gepanzertes Fahrzeug mit einem Doppelboden zum Schutz gegen Minenexplosionen anzugeben, der eine Verbundplatte mit wenigstens einer Kernschicht aus einer wabenförmigen Struktur umfasst, die zwischen einer ersten und einer zweiten Deckschicht angeordnet und mit diesen verbunden ist. In die Verbundplatte sind Haltemittel zur Verbindung der Verbundplatte mit dem Fahrzeug integriert.

Der erfindungsgemäße Laufboden ist schwingungsarm. Ferner besteht die Möglichkeit, durch eine geeignete Wahl der einzelnen Komponenten der Verbundplatte die mechanischen Eigenschaften des Bodens zu beeinflussen, um unterschiedliche technische Anforderungen und kommerzielle Restriktionen zu berücksichtigen, so dass Laufböden mit unterschiedlichen Schutzniveaus konstruiert werden können.

Vorteilhafte Ausführungsformen der Erfindung sind in den Unteransprüchen angegeben. So kann die Kernschicht Glasfaserwaben, Metallwaben, insbesondere Aluminiumwaben, Aramidwaben oder Kohlenstofffaserwaben aufweisen. Glasfaserwaben und Aluminiumwaben sind bevorzugt und weisen besonders gute Versteifungs- und Absorptionseigenschaften auf.

Die erste und zweite Deckschicht können aus denselben oder aus verschiedenen Materialien gebildet sein. Bei einer symmetrisch aufgebauten Verbundplatte sind beide Deckschichten aus demselben Material gebildet, wobei in diesem Fall die Kernschicht überwiegend Versteifungsaufgaben übernimmt. Im Fall einer asymmetrisch aufgebauten Verbundplatte, bei der die beiden Deckschichten aus verschiedenen Materialien gebildet sind, wirkt die Kernschicht verstärkt als Crash-Absorber. Dabei kann die feindseitig angeordnete Deckschicht der Verbundplattte, also die untere Deckschicht dehnbarer als die freundseitig angeordnete Deckschicht sein, also als die obere Deckschicht. In anderen Worten ist die obere Deckschicht steifer als die untere Deckschicht.

Die erste und/oder zweite Deckschicht können ein Glasfaserlaminat, ein Kohlenstofffaserlaminat, eine Aramidschicht, eine Keramikschicht oder ein Metallblech, insbesondere ein Aluminiumblech oder ein Stahlblech, aufweisen. Bei der Ausführungsform mit symmetrischer Verbundplatte, sind die beiden Deckschichten aus demselben Material bzw. Werkstoff aufgebaut. Bei der asymmetrischen Verbundplatte können die vorstehend genannten verschiedenen Materialien für die erste und zweite Deckschicht miteinander kombiniert werden, beispielsweise derart, dass die untere Deckschicht dehnbarer ist als die obere freundseitig angeordnete Deckschicht.

Eine der Deckschichten, insbesondere die im Gebrauch freundseitig angeordnete Deckschicht kann mit einem spall liner zum Schutz vor Splittern verbunden sein. Der spall liner kann beispielsweise aus Aramid oder Polyethylen, insbesondere aus UHMWPE gebildet sein. Der spall liner kann je nach Anforderung mit oder ohne Gummierung ausgebildet sein. Der spall liner dient dazu, Kleinteile, wie beispielsweise Steinchen, Schrauben usw. die sich im Zwischenbodenbereich zwischen dem Minenschutzboden und dem Laufboden befinden, abzufangen. Diese Teilchen können als Geschoß wirken und den Laufboden durchschlagen, wenn die Mine explodiert.

Dasselbe gilt für Schweißnähte oder Schrauben und Teile die bei einer Minendetonation gelöst werden und als Fragmente den Laufboden durchschlagen und die Insassen gefährden. Die Anbringung eines spall liners auf der freundseitigen Deckschicht hat sich als wirksamer Schutz gegen derartige Splitter bzw. Teilchen erwiesen, die bei einer Minenexplosion auf die feindseitige Seite des Laufbodens prallen. Die Gummierung dient als zusätzliche Dämpfung und schützt überdies als Abdichtung, beispielsweise gegen eine ABC-Bedrohung.

Alternativ kann eine der beiden Deckschichten oder können beide Deckschichten als Durchschlagschutz ausgebildet sein, bspw. durch Einstellung einer geeigneten Schichtdicke.

Auf dem spall liner kann ein rutschfester Belag, insbesondere Fußbodenbelag aufgebracht sein, beispielsweise ein PVC-Belag oder ein entsprechender Belag. Der Fußbodenbelag kann bündig mit der Verbundplatte abschließen oder über diese hinaus vorstehen, um vom Kunden mit der Wagenstruktur verklebt zu werden, damit der Laufboden als solcher nicht unmittelbar vom Wageninneren aus sichtbar ist.

Bei einer bevorzugten Ausführungsform ist eine dämpfende Schicht, insbesondere aus einem Gel, Schaumstoff oder Gummi, auf dem spall liner oder auf der im Gebrauch oberen Deckschicht angeordnet ist. Dadurch wird der Schutz der Insassen weiter verbessert. Bei der Ausführungsform, bei welcher der rutschfeste Belag den Abschluss des Bodens bildet, kann die dämpfende Schicht zwischen dem rutschfesten Belag und dem spall liner angeordnet sein.

Die Haltemittel zur Verbindung des Laufbodens mit dem Fahrzeug können an sich bekannte Inserts und/oder Pottings und/oder Profile umfassen, die in die Verbundplatte eingelassen sind. Die vorstehend genannten Haltemittel sind dabei sowohl in ihrer Form als auch in ihrer Anordnung angepasst derart, dass der Laufboden mit dem Fahrzeug verbunden werden kann.

Bei einer weiteren Ausführungsform sind die Deckschichten und die Kernschicht durch einen Klebefilm verbunden. Der Klebefilm kann zur Einstellung eines großen Meniskus an der Grenzfläche zwischen der Deckschicht und einer Wabe der Kernschicht angepasst sein. Ein großer Meniskus ist im Rahmen der Erfindung mit bloßem Auge optisch zu erkennen und weist eine im Winkel zwischen Wabe und Deckschicht angeordnete konkave Krümmung auf.

Zur Einstellung des Meniskus kann der Klebefilm ein Flächengewicht von mindestens 100 g/m² aufweisen. Die Untergrenze des Flächengewichts von 100 g/m² führt zu einer guten Benetzung der Wabe, so dass sich in der Wabe bzw. an der Grenzfläche zur Wabe ein großer Meniskus ausbildet. Dadurch wird erreicht, dass einerseits eine gute Anhaftung der Kernschicht an der Deckschicht erfolgt. Andererseits wird das Volumen der einzelnen Waben der Kernschicht so wenig wie möglich durch den Raumbedarf der Klebeschicht verringert, so dass ein Freiraum in der Wabe bestehen bleibt, der für die guten Crash-Absorptionseigenschaften der Wabe dienlich ist. Es hat sich gezeigt, dass ein Klebefilm mit einem Flächengewicht von mindestens 100 g/m² zu guten Ergebnissen im Hinblick auf die Meniskusbildung führt. Ein geeigneter Klebefilm kann beispielsweise durch einen hohen Harzanteil hergestellt werden.

Das Glasfaserlaminat kann einen Thermoplast-Klebefilm mit einem Flächengewicht von 5 - 300 g/m² und einer Shore-Härte von 25 - 200 A aufweisen. Das E-Modul liegt in Maschinenrichtung zwischen 1000 MPa und 4000 MPa, in transversaler Richtung zwischen 800 MPa und 4500 MPa.

Vorteilhafterweise entspricht die Faserdicke des Glasfaserlaminats wenigstens der doppelten Klebefilmdicke. Die Klebefilmdicke kann 5 bis 250 µm betragen. Durch den Einsatz von Klebefilmen und Geweben bzw. Fasern mit abgestimmter Dicke kann ein Luftspalt an den Fasern der Decklage erzeugt werden, welcher der Decklage eine gewisse zusätzliche Elastizität verleiht, bei guter Steifigkeit.

Die Erfindung bezieht sich ferner auf ein gepanzertes Fahrzeug mit einem Laufboden nach Anspruch 1 und einem Minenschutzboden, wobei der Laufboden vom Minenschutzboden beabstandet und oberhalb des Minenschutzbodens angeordnet ist. Die im Zusammenhang mit dem Laufboden bestehenden Vorteile kommen auch hier zum Tragen.

Bei einer Ausführung des Fahrzeugs bildet der Laufboden und der Minenschutzboden einen durch eine Minenexplosion komprimierbaren Zwischenraum, der mit Luft gefüllt ist.

Bei einer bevorzugten Ausführung ist der Laufboden mit einem Befestigungselement des Fahrzeugs verbunden derart, dass der Laufboden bei einer Minenexplosion schwingfähig ist. Überraschenderweise hat sich gezeigt, dass bei einer schwingfähigen Lagerung des Laufbodens besonders niedrige Spitzenkräfte auf die Insassen übertragen werden.

Dabei können vorzugsweise wenigstens zwei gegenüberliegende Seiten des Laufbodens mit dem Befestigungselement zur Übertragung von Kräften verbunden sein. Wenigstens zwei weitere gegenüberliegende Seiten des Laufbodens sind frei angeordnet derart, dass der Laufboden bei einer Minenexplosion schwingfähig ist.

Ferner beruht die Erfindung auf einem Verfahren zur Herstellung eines Laufbodens für ein gepanzertes Fahrzeugs, bei dem zur Herstellung einer Verbundplatte eine Kernschicht aus einer wabenförmigen Struktur beidseitig mit einer ersten und zweiten Deckschicht verbunden und die Verbundplatte an die Form des Innenraums des Fahrzeugs angepasst wird, wobei Haltemittel zur Verbindung der Verbundplatte mit dem Fahrzeug in die Verbundplatte integriert werden. Die Decklagen können, im Fall von Glasfaserlaminaten aus trockenem Gewebe bzw. Gelege hergestellt werden. Dabei wird ein trockenes Gewebe oder Gelege durch Klebefilme verbunden. Alternativ können prepregs verwendet werden, also mit Klebstoff vorimprägnierte Fasern.

Die Erfindung wird nachfolgend anhand von Ausführungsbeispielen unter Bezug auf die beigefügten schematischen Figuren mit weiteren Einzelheiten näher erläutert. Diese zeigen:
- Fig. 1: einen Querschnitt durch einen Laufboden nach einem erfindungsgemäßen Ausführungsbeispiel mit symmetrisch aufgebauter Verbundplatte und
- Fig. 2: einen Querschnitt durch einen Laufboden nach einem weiteren erfindungsgemäßen Ausführungsbeispiel mit einer asymmetrisch aufgebauten Verbundplatte.

Der dargestellte Laufboden weist eine Verbundplatte 10 auf, die für den Einsatz in einem gepanzerten Fahrzeug mit einem Doppelboden angepasst ist. Der Laufboden 10 ist mit einem separaten, im eingebauten Zustand beabstandeten Minenschutzboden, insbesondere einem Minenschutzboden in der Form einer Stahlplatte kombinierbar. Der Laufboden 10 und der Minenschutzboden bilden zusammen den Doppelboden bzw. allgemein einen Mehrfachboden, bei dem der Laufboden den Innenraum des Fahrzeugs nach unten abschließt. Der Doppelboden ist an sich bekannt.

Dabei wird sowohl der für die Bildung eines Doppelbodens eines gepanzerten Fahrzeuges angepasste Laufboden an sich, d.h. unabhängig vom Fahrzeug, als auch ein gepanzertes Fahrzeug mit einem Doppelboden, der einen derartigen Laufboden aufweist, offenbart und beansprucht. Die Form des Laufbodens bzw. die Außenkontur des Laufbodens ist an den Fahrzeuginnenraum bzw. generell an die Kontur der Fahrzeuginnenteile angepasst, in welchen der Laufboden bei der Montage eingesetzt wird. Der Laufboden kann durch das gesamte Fahrzeug bzw. den Innenraum gehen. Dies ist aber nicht zwingend und oftmals aus konstruktiven Gründen auch nicht möglich. Der Laufboden kann aus einzelnen Bodensegmenten bestehen, die im montierten Zustand unter den Insassen des Fahrzeugs angeordnet sind und mit anderen, auch herkömmlichen, Bodensegmenten zur Bildung des Gesamtbodens kombinierbar sind.

Der Laufboden ist in Verbundbauweise aufgebaut und weist eine Verbundplatte 10 auf, die sich aus einer Kernschicht 11 und einer ersten und zweiten Deckschicht 12a, 12b zusammensetzt. Die Einheit aus Kernschicht 11 und den beiden Deckschichten 12a, 12b kann in Dickenrichtung der Verbundplatte wiederholt werden, so dass sich ein alternierender Aufbau aus Kernschichten und Deckschichten ergibt. Beispielsweise ist es möglich, zwei oder mehr Kernschichten, insbesondere 3, 4 oder 5 Kernschichten vorzusehen, die jeweils durch Deckschichten voneinander getrennt sind.

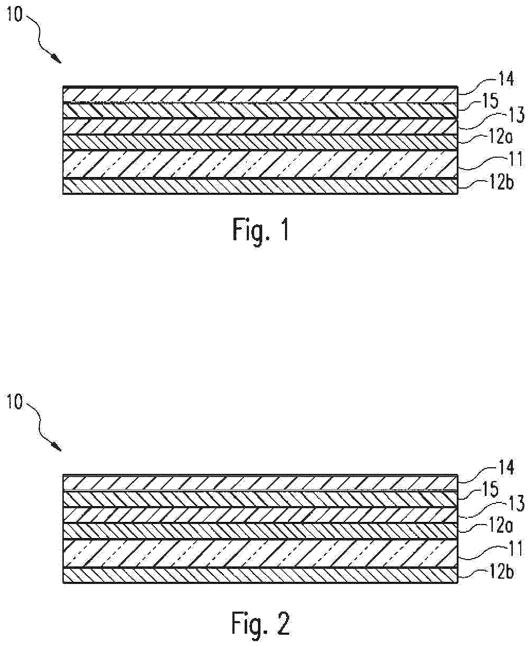

Bei dem in den Fig. 1, 2 dargestellten Ausführungsbeispiel ist eine einzige Kernschicht 11 vorgesehen, wobei auf beiden Seiten der Kernschicht 11 jeweils eine Deckschicht 12a, 12b angeordnet ist. Die erste obere Deckschicht 12a ist freundseitig, d.h. in Richtung des Wageninneren angeordnet. Die untere feindseitig angeordnete zweite Deckschicht 12b begrenzt den Zwischenbodenraum zwischen dem Laufboden und einem nicht dargestellten unteren Minenschutzboden. Die Kernschicht 11 weist eine wabenförmige Struktur (honeycomb) auf. Die Kernschicht 11 ist aus nebeneinander angeordneten Waben aufgebaut.

Die Wabenkerne bzw. die Kernschicht aus der wabenförmigen Struktur kann Glasfaserwaben umfassen. Dabei erfolgt keine Einschränkung auf eine bestimmte Glasorte. Vorzugsweise werden für die Glasfasern E-Glas, also die übliche auf dem Markt befindliche Standardfaser, oder S-Glas, oder S2-Glas, also Fasern mit erhöhter Festigkeit verwendet. Derartige Fasern aus E-Glas, S-Glas und S2 Glas sind bekannt. Ferner können Glasfasern der Firma Pohris^{®}, sowie die Glasfaserprodukte HIPer-Tex^{®} oder Advantex^{®} verwendet werden.

Alternativ können Aluminiumwaben bzw. eine Kernschicht aus Aluminiumwaben verwendet werden, ohne Einschränkung auf eine bestimmte Legierung. Bevorzugt werden folgende Legierungen: 3003, 5052, 5056 und 7000. Ferner ist es möglich, die Kernschicht aus Aramid-Waben herzustellen, ohne Einschränkung auf ein bestimmtes Aramid oder Para-Aramid. Besonders bevorzugt werden Kevlar^{®} bzw. Nomex^{®}. Weiterhin können Polypropylen-Waben oder Kohlenstofffaserwaben verwendet werden. Generell sind faserverstärkte Kunststoffwaben möglich.

Die Zellgrößen betragen 1 - 50 mm, insbesondere wenigstens 1mm, wenigstens 2 mm, wenigstens 3 mm, wenigstens 4 mm, wenigstens 5 mm, wenigstens 10 mm, wenigstens 15 mm, wenigstens 20 mm, wenigstens 25 mm, wenigstens 30 mm, wenigstens 35 mm, wenigstens 40 mm. Die Obergrenze der Zellgrößen kann 50 mm, insbesondere höchstens 45 mm, insbesondere höchstens 40 mm, insbesondere höchstens 35 mm, insbesondere höchstens 30 mm, insbesondere höchstens 25 mm, insbesondere höchstens 20 mm, insbesondere höchstens 15 mm, insbesondere höchstens 10 mm betragen. Als besonders vorteilhaft hat sich eine Zellgröße im Bereich von 3,0 - 5,0 mm erwiesen. Das Raumgewicht der Glasfaserwaben kann 20 - 300 kg/m³ betragen. Die Untergrenze kann 20 kg/m³, insbesondere wenigstens 30 kg/m³, wenigstens 40 kg/m³, wenigstens 50 kg/m³, wenigstens 60 kg/m³, wenigstens 70 kg/m³, wenigstens 80 kg/m³, wenigstens 90 kg/m³, wenigstens 100 kg/m³, wenigstens 110 kg/m³, wenigstens 120 kg/m³, wenigstens 130 kg/m³, wenigstens 140 kg/m³, wenigstens 15kg/m³, wenigstens 160 /m³, wenigstens 170 kg/m³, wenigstens 180 kg/m³, wenigstens 190 kg/m³, wenigstens 200 kg/m³, wenigstens 210 kg/m³, wenigstens 220 kg/m³, wenigstens 230 kg/m³, wenigstens 240 kg/m³, wenigstens 250 kg/m³, betragen. Die Obergrenze des Raumgewichts der Glasfaserwaben beträgt 300 kg/m³, insbesondere höchstens 290 kg/m³, insbesondere höchstens 280 kg/m³, insbesondere höchstens 270 kg/m³, insbesondere höchstens 260 kg/m³, insbesondere höchstens 250 kg/m³, insbesondere höchstens 240 kg/m³, insbesondere höchstens 230 kg/m³, insbesondere höchstens 220 kg/m³, insbesondere höchstens 210 kg/m³, insbesondere höchstens 200 kg/m³. Ein besonders bevorzugter Bereich liegt zwischen 120 und 200 kg/m³. Die Dicke der Wabenscheiben kann 2 mm - 20 cm betragen. Die Untergrenze der Dicke der Wabenscheiben kann 2 mm, insbesondere wenigstens 5 mm, insbesondere wenigstens 1 cm, insbesondere wenigstens 1,5 cm, insbesondere wenigstens 2 cm, insbesondere wenigstens 2,5 cm, insbesondere wenigstens 3 cm, insbesondere wenigstens 5 cm, insbesondere wenigstens 10 cm, insbesondere wenigstens 15 cm betragen. Die Obergrenze kann 20 cm, insbesondere höchstens 15 cm, insbesondere höchstens 10 cm, insbesondere höchstens 5 cm, insbesondere höchstens 3 cm betragen. Ein bevorzugter Bereich für die Dicke der Wabenscheiben liegt zwischen 1 cm und 3,5 cm, insbesondere zwischen 1,5 cm und 3 cm.

Die vorstehend genannten Kernschichten aus den unterschiedlichen Materialien, d.h. alle vorstehend genannten Wabenkerne, können mit verschiedenen Deckschichten kombiniert werden und zwar entweder zu symmetrischen Verbundplatten oder asymmetrischen Verbundplatten. Dabei ist es möglich, dass die Kernschicht und wenigstens eine, insbesondere beide Deckschichten aus unterschiedlichen Materialien gebildet sind. Beispielsweise kann die Kernschicht aus Glasfaserwaben und wenigstens eine Deckschicht oder beide Deckschichten aus einem metallischen Werktoff gebildet sein. Es ist auch möglich, sowohl die Kernschicht als auch die beiden Deckschichten aus Glasfaserwerkstoffen zu bilden. Die Kernschicht kann auch aus Aluminiumwaben gebildet sein und mit Glasfaserdeckschichten verbunden sein. Auch hier ist es möglich, die Kernschicht aus Aluminiumwaben für einen symmetrischen Aufbau der Verbundplatte mit denselben Deckschichten oder für einen asymmetrischen Aufbau mit unterschiedlichen Deckschichten zu kombinieren.

Unabhängig vom Material der Deckschichten, bspw. bei Deckschichten aus Glasfasern (GFK-Laminat) oder bei Deckschichten aus anderen Materialien, kommt die Herstellung aus trockenem Gewebe bzw. trockenem Gelege in Frage, die mit Klebefilmen verbunden werden. Alternativ ist möglich, ein mit Kleber vorimprägniertes Gewebe bzw. Gelege zu verarbeiten (prepreg).

Für den Klebstoff kommen Thermoplast-Klebefilme mit einem Flächengewicht von 5 - 300 g/m² in Frage. Die Untergrenze des Flächengewichts kann 5 g/m² betragen, insbesondere wenigstens 10 g/m², wenigstens 20 g/m², wenigstens 30 g/m², wenigstens 40 g/m², wenigstens 50 g/m², wenigstens 60 g/m², wenigstens 70 g/m², wenigstens 80 g/m², wenigstens 90 g/m², wenigstens 100 g/m², wenigstens 110 g/m², wenigstens 120 g/m², wenigstens 130 g/m², wenigstens 140 g/m², wenigstens 150 g/m², wenigstens 160 g/m², wenigstens 170 g/m², wenigstens 180 g/m², wenigstens 190 g/m², wenigstens 200 g/m². Die Obergrenze des Flächengewichts der Thermoplast-Klebefilme beträgt 300 g/m², insbesondere höchstens 290 g/m², insbesondere höchstens 280 g/m², insbesondere höchstens 270 g/m², insbesondere höchstens 260 g/m², insbesondere höchstens 250 g/m², insbesondere höchstens 240 g/m², insbesondere höchstens 230 g/m², insbesondere höchstens 220 g/m², insbesondere höchstens 210 g/m², insbesondere höchstens 200 g/m², insbesondere höchstens 190 g/m², insbesondere höchstens 180 g/m², insbesondere höchstens 170 g/m², insbesondere höchstens 160 g/m², insbesondere höchstens 150 g/m², insbesondere höchstens 140 g/m², insbesondere höchstens 130 g/m², insbesondere höchstens 120 g/m², insbesondere höchstens 110 g/m², insbesondere höchstens 100 g/m². Ein bevorzugter Bereich beträgt 70 - 150 g/m², insbesondere 72 - 144 g/m². Die Shore-Härte der Thermoplast-Klebefilme liegt in einem Bereich von 25 - 200 A. Die Untergrenze beträgt 25 A, insbesondere wenigstens 30 A, wenigstens 40 A, wenigstens 50 A, wenigstens 60 A, wenigstens 70 A, wenigstens 80 A, wenigstens 90 A, wenigstens 100 A, wenigstens 110 A, wenigstens 120 A, wenigstens 130 A, wenigstens 140 A, wenigstens 150 A.

Die Obergrenze beträgt 200 A, insbesondere höchstens 190 A, insbesondere höchstens 180 A, insbesondere höchstens 170 A, insbesondere höchstens 160 A, insbesondere höchstens 150 A, insbesondere höchstens 140 A, insbesondere höchstens 130 A, insbesondere höchstens 120 A, insbesondere höchstens 110 A, insbesondere höchstens 100 A, insbesondere höchstens 90 A, insbesondere höchstens 80 A, insbesondere höchstens 70 A, insbesondere höchstens 60 A, insbesondere höchstens 50 A. Ein besonders bevorzugter Bereich für die Shore-Härte beträgt 80 - 110 A. Die Filmdicke der einzelnen Thermoplast-Klebefilme zwischen den Laminatschichten liegt in einem Bereich von 5 µm - 250 µm. Die Untergrenze der Filmdicke beträgt 5 µm, insbesondere wenigstens 10 µm, insbesondere 15 µm, insbesondere wenigstens 20 µm, insbesondere wenigstens 25 µm, insbesondere wenigstens 30 µm, insbesondere wenigstens 40 µm, insbesondere wenigstens 50 µm, insbesondere wenigstens 60 µm, insbesondere wenigstens 70 µm, insbesondere wenigstens 80 µm, insbesondere wenigstens 90 µm, insbesondere wenigstens 100 µm. Die Obergrenze der Filmdicke beträgt 250 µm, insbesondere höchstens 225 µm, insbesondere höchstens 200 µm, insbesondere höchstens 175 µm, insbesondere höchstens 150 µm, insbesondere höchstens 140 µm, insbesondere höchstens 130 µm, insbesondere höchstens 120 µm, insbesondere höchstens 110 µm, insbesondere höchstens 100 µm, insbesondere höchstens 90 µm, insbesondere höchstens 80 µm, insbesondere höchstens 70 µm, insbesondere höchstens 60 µm, insbesondere höchstens 50 µm. In Abhängigkeit vom jeweils verwendeten Klebefilm und dem eingesetzte Gewebe werden 10 - 70 Gew.-% Klebstoff verwendet.

Als Glasfasern für die Deckschichten zur Herstellung des GFK-Laminates können herkömmliches E-Glas mit einem E-Modul von ca. 70 bis 80 GPa, insbesondere von ca. 72 GPa, herkömmliches S-Glas mit einem E-Modul von ca. 80 bis 90 GPa, insbesondere von ca. 87 GPa; herkömmliches S2-Glas, sowie die Glasfasern HIPer-Tex^{®} (E-Glas mit abgeänderter chemischer Zusammensetzung und daher mit einem gegenüber herkömmlichem E-Glas erhöhten E-Modul von ca. 90 GPa), die Glasfasern Advantex^{®}, (borfreies korrosionsstabiles E-Glas, bei dem das Harz die Faser bereits umgibt und das ein gegenüber herkömmlichem E-Glas erhöhtes E-Modul von ca. 81 GPa erreicht), und Glasfasern der Firma Pohris verwendet werden, die Glas mit einem E-Modul von ca. 100 GPa anbieten. Insgesamt können Glasfasern mit einem E-Modul von ca. 70 bis ca. 100 GPa verwendet werden, wobei der Bereich von ca. 90 GPa bis ca. 100 GPa bevorzugt ist. Für die Deckschichten und die Waben können dieselben oder unterschiedliche Glassorten verwendet werden.

Die vorstehend genannten Glasfasern können mit den genannten Klebstoffen bzw. mit Klebstoffen mit den vorgenannten Eigenschaften kombiniert sein. Die Faseranordnung kann beispielsweise eine Leinwandbindung, insbesondere mit Quer- oder Kettrips, Längs- oder Schussrip, Panamabindung sein. Die Faseranordnung kann unidirektional sein. Dabei ist eine Köperbindung oder Atlasbindung möglich. Die vorstehend genannten Faseranordnungen können miteinander kombiniert werden, insbesondere in unterschiedlichen Lagen. Das Flächengewicht beträgt 250 - 750 g/m². Die Untergrenze beträgt 250 g/m², insbesondere wenigstens 300 g/m², insbesondere wenigstens 350 g/m², insbesondere wenigstens 400 g/m², insbesondere wenigstens 450 g/m², insbesondere wenigstens 500 g/m², insbesondere wenigstens 550 g/m², insbesondere wenigstens 600 g/m², insbesondere wenigstens 650 g/m², insbesondere wenigstens 700 g/m². Die Obergrenze beträgt 750 g/m², insbesondere höchstens 700 g/m², insbesondere höchstens 650 g/m², insbesondere höchstens 600 g/m², insbesondere höchstens 550 g/m², insbesondere höchstens 500 g/m², insbesondere höchstens 450 g/m², insbesondere höchstens 400 g/m², insbesondere höchstens 350 g/m², insbesondere höchstens 300 g/m². Ein besonders bevorzugter Bereich beträgt 500 - 640 g/m².

Die Anzahl der Faserlagen des GFK-Laminats kann variieren und zwar von einer bis mehreren hundert Schichten. Die Dicke der Decklagen ist in einem Bereich von 5 µm bis 8 cm, insbesondere in einem Bereich von 1 mm - 4 cm, insbesondere 2 mm - 3 cm. Die einzelnen Lagen können zueinander unterschiedlich orientiert sein, derart, dass eine quasi-isotrope Deckenlage bzw. Deckschicht entsteht. Es ist auch möglich, durch eine geeignete Anordnung Lagen zueinander anisotrope Deckschichten zu erzeugen.

Die Dicke der Klebefilme und der einzelnen Gewebelagen bzw. der einzelnen Fasern ist aufeinander abgestimmt derart, dass sich ein Spalt an den Fasern der Decklage bildet bzw. dass sich Spalte zwischen den jeweiligen Laminatlagen bilden. Dies wird dadurch erreicht, dass die Faserdicke wenigstens der zweifachen Klebefilmdicke entspricht bzw. größer ist als de zweifache Klebefilmdicke. Dies führt dazu, dass dein Teil des Klebefilms eine untere Faser zumindest teilweise einbettet und ein anderer Teil desselben Klebefilms die nächste obere Faser. Da die zweifache Klebefilmdicke kleiner als die Faserdicke ist, ergibt sich ein Spalt zwischen den beiden Klebefilmen. Die Faser ist somit in einer Sandwichform aus Klebstoff eingefasst, der die Faser aber nicht komplett umschließt, sondern einen Spalt frei lässt. Dadurch erhält die Deckschicht eine zusätzliche Elastizität bei guter Steifigkeit.

Für die Verbindung der Deckschichten 12a, 12b mit der Kernschicht 11 kommt ein Klebefilm mit hohem Harzanteil in Frage, der beispielsweise ein Flächengewicht von wenigstens 100 g/m² aufweist. Die Untergrenze des Flächengewichts des Klebstoffes beträgt 100 g/m², insbesondere wenigstens 120 g/m², insbesondere wenigstens 140 g/m², insbesondere wenigstens 160 g/m², insbesondere wenigstens 180 g/m², insbesondere wenigstens 200 g/m², insbesondere wenigstens 210 g/m², insbesondere wenigstens 220 g/m², insbesondere wenigstens 240 g/m², insbesondere wenigstens 260 g/m², insbesondere wenigstens 280 g/m². Die Obergrenze des Flächengewichts des Klebefilms beträgt 300 g/m², insbesondere höchstens 280 g/m², insbesondere höchstens 260 g/m², insbesondere höchstens 240 g/m², insbesondere höchstens 220 g/m², insbesondere höchstens 200 g/m², insbesondere höchstens 180 g/m², insbesondere höchstens 160 g/m², insbesondere höchstens 140 g/m², insbesondere höchstens 120 g/m². Vorzugsweise liegt das Flächengewicht des Klebefilms in einem Bereich von 100 - 300 g/m², insbesondere in einem Bereich von 180 g/m². Damit wird eine besonders gute Benetzung der Wabenwände mit dem Klebstoff erreicht und ein möglichst großer Meniskus an der Grenzfläche zur Wabe ausgebildet. Durch den großen Meniskus wird eine feste Verbindung zwischen der Deckschicht und der Kernschicht erreicht. Außerdem wird das Volumen der Wabe so wenig wie möglich mit Klebstoff gefüllt, um das freie Volumen der Wabe für die mechanischen Eigenschaften des Laufbodens zu erhalten, z. B. als crash Zone.

Das bevorzugte Material für die Herstellung der Deckschichten 12a, 12b sind GFK-Laminate. Andere mögliche Materialien umfassen CFK-Laminate, insbesondere aus PAN-based, Pitch-based, aus der Dampfphase gewachsene Kohlenstofffasern (vaporgrown carbon fibres), Keramik, insbesondere Aluminiumoxide, Siliziumcarbid, Borcarbid, Stahl, insbesondere Panzerstähle, Aluminium, ohne Einschränkung auf eine bestimmte Legierung, Aramide und Para-Aramide, insbesondere Kevlar^{®}, Nomex^{®}, Twaron^{®}.

Bei symmetrisch aufgebauten Verbundplatten weisen beide Deckschichten 12a, 12b dieselben Materialien auf. Dabei ist es möglich, die Dicke der Deckschichten ebenfalls gleich oder auch unterschiedlich auszubilden derart, dass eine Deckschicht stärker als die andere Deckschicht ist. Dasselbe gilt für asymmetrisch aufgebaute Verbundplatten, bei denen die beiden Deckschichten ebenfalls die gleiche Dicke oder unterschiedliche Dicken aufweisen können, wobei die asymmetrischen Vernbundplatten aber aus unterschiedlichen Materialien bestehen.

Optional kann auf der freundseitig angeordneten Deckschicht 12a, d.h. auf der ersten Deckschicht 12a, die im eingebauten Zustand oben angeordnet ist, ein spall liner 13 angeordnet sein, der als Splitterschutz dient. Der spall liner kann aus Aramiden oder Abkömmlingen davon, insbesondere aus Kevlar^{®}, Nomex^{®} und Twaron^{®} hergestellt sein. Es ist auch möglich, den spall liner 13 aus Ultra-High-Molecular-Weight-Polyethylen (UHMWPE), auch bekannt als High-Modulous Polyethylen (HMPE) oder High-Performance-Polyethylen (HPPE) hergestellt sein. Die vorstehend genannten Materialien können gummiert oder als Reinstoff auf die erste Deckschicht 12a des Laufbodens aufgebracht werden. Es ist auch möglich, den Laufboden mit dreilagigem Aufbau, d.h. nur mit der Kernschicht 11 und den beiden Deckschichten 12a, 12b zu verwenden. Dabei ist die erste Deckschicht 12a, die im Gebrauch oben angeordnet ist, diejenige Schicht des Laufbodens, auf der die Soldaten bzw. Insassen des gepanzerten Fahrzeuges stehen.

Der optionale spall liner 13 erhöht den Schutz gegen abgesprengte Fragmente bzw. lose im Zwischenbodenbereich befindliche Objekte, wie beispielsweise Schrauben oder Steinchen. Der gummierte spall liner 13 hat weiterhin den Vorteil, dass die zusätzliche Gummierung eine weitere Dämpfung gegen den Druckstoß der explodierenden Mine ergibt. Außerdem bildet die Gummierung des spall liners einen Schutz gegen einen ABC-Angriff und versiegelt den Boden. Der spall liner kann bündig mit dem Laufboden abschließen oder über diesen überstehen. Im letzteren Fall ist eine Verklebung mit der Bodenstruktur des Fahrzeuges möglich, ohne dass Lücken zwischen dem Laufboden und der Bodenstruktur entstehen. Die Dicke des spall liners ist variabel und hängt von den jeweiligen Bedrohungsanforderungen ab. Der Dickenbereich des spall liners kann zwischen 0,3 mm bis 20 mm liegen. Die Untergrenze beträgt 0,3 mm, insbesondere wenigstens 0,6 mm, insbesondere wenigstens 0,9 mm, insbesondere wenigstens 1,2 mm, insbesondere wenigstens 1,5 mm, insbesondere wenigstens 2 insbesondere wenigstens 5 mm, insbesondere wenigstens 10 mm. Die Obergrenze beträgt 20 mm, insbesondere höchstens 15 mm, insbesondere höchstens 10 mm, insbesondere höchstens 5 mm, insbesondere höchstens 4 mm, insbesondere höchstens 3 mm, insbesondere höchstens 2 mm.

Auf dem spall liner 13 ist bei dem Ausführungsbeispiel gemäß Fig. 1 bzw. Fig. 2 ein Dämpfungselement bzw. eine dämpfende Schicht 15 und darauf ein rutschfester Fußbodenbelag 14, beispielsweise aus PVC oder ähnlichem Material vorgesehen. Das Dämpfungselement 15 ist auf dem spall liner 13 und unter dem rutschfesten Belag 14 angeordnet. Als Dämpfungselemente gegen Druckstöße und Schwingungen finden Anwendung: Gel (insbesondere Gel-Matten, Gel-Noppen usw.), Schaumstoff und Gummi. Die Dicke der dämpfenden Schicht 15 kann von 2 mm bis 2 cm reichen. Eine einzelne Schicht oder ein Dämpfungsverbund von übereinander gestapelten unterschiedlichen Dämpfern (z. B. zuerst Gummi-Matte gefolgt von Gel-Matte) sind möglich. Der Fußbodenbelag 14 kann alternativ direkt auf dem spall liner 13 oder direkt auf der oberen Deckschicht 12a angeordnet sein. Für den Fußbodenbelag 14 und das Dämpfungselement 15 gilt dasselbe wie für den spall liner 13, der bündig oder überstehend mit dem Laufboden, bzw der Kernschicht 11 vorgesehen sein kann, um diesen mit der Fahrzeugstruktur verkleben zu können. Die Anbindung des Fußbodens zum Laufboden erfolgt durch Verkleben und Verpressen bei erhöhter Temperatur bzw. im Autoklav bei erhöhter Temperatur.

Wenn der Laufboden ohne spall liner ausgeführt ist, befindet sich das Dämpfungselement 15 direkt auf der im Gebrauch oberen Deckschicht des Wabenpanels und unter dem rutschfesten Belag 14. Im Zusammenhang mit allen Ausführungsbeispielen sowie generell im Zusammenhang mit der Erfindung wird offenbart, dass die Deckschichten 12a, 12b direkt auf der Kernschicht 11 angeordnet sind bzw. direkt mit der Kernschicht 11 verbunden sind.

Zur Anbindung des Laufbodens bzw. der Verbundplatte 10 an ein Fahrzeug bzw. die Bodenstruktur eines Fahrzeuges sind in die Verbundplatte Haltemittel integriert (nicht dargestellt). Diese können beispielsweise Inserts und Profile sein. Ein Insert ist ein nachträglich in die Verbundplatte eingeklebter Gewindeeinsatz, insbesondere ein metallischer Gewindeeinsatz. Die Grundform des Inserts ist zylindrisch mit zwei Flanschen an den Stirnseiten. Durch geeignete Öffnungen in einem der Flansche werden Einführ- und Entlüftungsbohrungen gebildet, durch die das Insert in eine entsprechende Öffnung in der Verbundplatte eingeklebt werden kann. Derartige Inserts sind an sich bekannt.

Die Haltemittel können ferner Pottings aufweisen, also Bereiche, in denen die Waben mit einer Kunststoffmasse auf Epoxidharz-Basis gefüllt sind. Die Pottingmasse hat im gemischten Rohzustand eine pastöse Konsistenz, so dass die Waben selektiv gefüllt werden können. Die Füllung der Wabenzellen kann beispielsweise zur partiellen Erhöhung der Druckfestigkeit in der Verbundplatte und/oder zum partiellen Einbringen von Bohrungen und/oder als Randverschluss verwendet werden. Die Pottingzusammensetzungen sind an sich bekannt.

Die Anordnung der Haltemittel im Laufboden und die Form des Laufbodens sind so angepasst, dass der Laufboden in die hierfür vorgesehene Aufnahme im Fahrzeuginneren eingesetzt werden kann. Dasselbe gilt für die Ausbildung des Laufbodens als Bodensegment.

Bei dem Verfahren zur Herstellung des Laufbodens kommt die an sich bekannte Vorgehensweise zur Herstellung einer wabenförmigen Struktur zum Einsatz, bei der eine Folie aus dem Wabenmaterial, beispielsweise aus Nomex^{®}, Kevlar^{®}, Glasfasern oder Aluminium mit Klebstofflinien bedruckt wird, die so angeordnet sind, dass mehrere übereinander angeordnete zu einem Stapel verbundene Folien jeweils versetzt zueinander angeordnete Klebstofflinien aufweisen. Nachdem der Folienstapel zu einem Block verpresst wurde, wird dieser mechanisch expandiert und stabilisiert, wodurch aufgrund der an sich bekannten Anordnung der Klebelinien die Wabenform gebildet wird. Der Wabenrohblock wird mit Kunststoff beschichtet, der ausgehärtet wird. Sodann werden Wabenschichten aus dem Block geschnitten. Eine oder mehrere Wabenschichten bilden die Kernschicht 11, die mit der ersten und zweiten Deckschicht verbunden, insbesondere verklebt wird. Dies erfolgt durch Heiß- oder Kaltverpressung oder im Autoklav.

Die vorstehend beschriebenen Ausführungsbeispiele der Erfindung umfassen schwingungsarme Laufböden, die für den Einsatz in einem gepanzerten Fahrzeug im Zusammenhang mit einem Minenschutzboden vorgesehen sind. Die einzelnen Merkmale der Laufböden gemäß den verschiedenen vorstehend erläuterten Ausführungsbeispielen werden sowohl einzeln als auch in Kombination miteinander offenbart. Ferner wird die Verwendung eines erfindungsgemäßen Laufbodens nach Anspruch 1 oder nach einem der vorstehend genannten Ausführungsbeispiele für ein gepanzertes Fahrzeug mit einem Doppelboden offenbart und beansprucht.

Erfindungsgemäß ist der Laufboden vom Minenschutzboden beabstandet und oberhalb des Minenschutzbodens, d.h. freundseitig, angeordnet. Im Zwischenraum zwischen dem Laufboden und dem Minenschutzboden befindet sich Luft, die im Fall einer Minenexplosion aufgrund der Verformung des Minenschutzbodens komprimiert wird. Der durch die schnelle Kompression der Luft entstehende Druckstoß wirkt sich auf den Laufboden aus, so dass Kräfte auf die sich im Innenraum des Fahrzeugs befindlichen Insassen, insbesondere auf die Schienbeine der Insassen, wirken. Eine signifikante Verringerung der Schienbeinbelastung wird erreicht, wenn der Laufboden so aufgehängt ist, dass dieser bei einer Minenexplosion schwingfähig ist. Dazu ist der Laufboden nur abschnittsweise mit einem Befestigungselement des Fahrzeugs verbunden. Die nicht mit dem Befestigungselement des Fahrzeuges verbundenen Abschnitte des Laufbodens können frei schwingen. Das Befestigungselement kann beispielsweise ein Rahmen sein, auf dem der Laufboden aufliegt und an diesem befestigt ist. Der Rahmen ist nicht umlaufend ausgebildet, sondern erstreckt sich nur entlang eines Teilumfanges des Laufbodens. Der nicht mit dem Rahmen verbundene Teil des Laufbodens ist frei. Es ist auch möglich, den Laufboden direkt mit den Wänden des Fahrzeugs zu verbinden. Auch hier ist ein Teilumfang des Laufbodens frei angeordnet. Für die Schwingfähigkeit des Laufbodens kommt es also darauf an, dass Seiten, bzw. allgemein ein Teilumfang, bzw. wenigstens ein Teilabschnitt, insbesondere mehrere Teilabschnitte des Umfangs des Laufbodens frei beweglich sind. Dies kann beispielsweise dadurch erreicht werden, dass wenigstens zwei gegenüberliegende Seiten des Laufbodens mit dem Befestigungselement mechanisch verbunden sind. Wenigstens zwei weitere gegenüberliegende Seiten des Laufbodens sind frei angeordnet. Das bedeutet, dass die freien Seiten des Laufbodens nicht mit dem Befestigungselement oder mit anderen Teilen des Fahrzeugs verbunden bzw. in Berührung stehen, so dass die freien Seiten des Laufbodens bezogen auf das Fahrzeug relativ beweglich sind. Insgesamt ist der Laufboden durch diese frei schwingende Aufhängung bei einer Minenexplosion schwingfähig. Vorteilhafterweise sind die kürzeren Seiten des Laufbodens, im Allgemeinen die quer zur Längsachse des Fahrzeuges angeordneten Seiten des Laufbodens, fest mit dem Befestigungselement bzw. dem Fahrzeug verbunden. Die langen Seiten des Laufbodens, im Allgemeinen die sich in Längsrichtung des Fahrzeugs erstreckenden Seiten des Laufbodens, sind frei angeordnet. Wenn der Laufboden segmentweise ausgebildet ist, können sich die langen Seiten der Laufbodensegmente, die frei angeordnet sind, quer zur Längsrichtung des Fahrzeugs erstrecken. Die kurzen Seiten sind dann in Längsrichtung des Fahrzeugs angeordnet und fixiert.

Vorteilhafterweise ist für die Schwingfähigkeit des Laufbodens entlang der freien Seiten ein Luftspalt zu den angrenzenden Fahrzeugteilen von wenigstens einem, insbesondere von mehreren Zentimetern, konkret von 2, 3, 4, 5 oder mehr als 5 Zentimetern vorgesehen. Die Befestigung der nichtschwingenden Seiten des Laufbodens kann durch Verschrauben oder materialschlüssig erfolgen. Insgesamt ergibt sich eine hängebrückenartige Konstruktion, wobei durch eine geeignete Materialauswahl die Biegesteifigkeit des Laufbodens an das zu tragende Gesamtgewicht angepasst werden kann.

Die Kombination eines Laufbodens, der eine Verbundplatte 10 mit wenigstens einer Kernschicht 11 aus einer wabenförmigen Struktur aufweist, die zwischen einer ersten und einer zweiten Deckschicht 12a, 12b angeordnet ist, mit der schwingfähigen Lagerung des Laufbodens im gepanzerten Fahrzeug führt dazu, dass der aufgrund der Wabenstruktur biegesteife Laufboden eine ausreichende Festigkeit aufweist, um das Gesamtgewicht der im Fahrzeug befindlichen Insassen zu tragen. Die schwingungsfähige Aufhängung des Laufbodens bringt die Flexibilität des Materials zum Tragen, wodurch eine signifikante Verbesserung der Adsorption der bei einer Minenexplosion auftretenden Kräfte erreicht wird.

Es hat sich gezeigt, dass sich bei Sprengversuchen nach STANAG 3b (Mine: 8 Kg TNT, mittig plaziert) die maximale Schienbeinbelastung auf 2,7 kN, bzw. 1,9 kN verringern lässt, was deutlich unterhalb der zulässigen Grenzwerte liegt. Diese Kräfte wirken direkt am Laufboden, der eine Glasfaserwabenstruktur aufweist. Außerdem konnte ein und derselbe Boden dreimal nach STANAG 3b angesprengt werden, ohne dass dieser eine nachhaltige Beeinträchtigung beispielsweise in Form einer Beulung der Morphologie oder der strukturellen Integrität erfahren hatte.

Ferner wird eine Glasfaserwabe offenbart, die gute mechanische und chemische Eigenschaften aufweist. Diese Wabe ist für die Herstellung des Laufbodens geeignet, ohne auf diese Anwendung eingeschränkt zu sein. Andere Anwendungen, bei denen es auf ein gutes Crash-Verhalten ankommt, sind möglich. Es wird klargestellt, dass der Laufboden mit anderen Waben, insbesondere mit anderen Glasfaserwaben, bspw. aus E-Glas, S-Glas oder S2-Glas hergestellt werden kann.

Die Glasfasern der Wabe weisen folgende Zusammensetzung in Gew.-% auf:

| | |
|---|---|
| 14 - 16,5 | Al₂O₃ |
| 0,8 - 1,2 | TiO₂ |
| 10 -12 | CaO |
| 4 - 6 | MgO |
| 0,8 -1,5 | ZnO |
| 0,1 - 0,3 | Na₂O |
| 0,1 - 0,2 | Fe₂O₃ |
| 0,1 - 0,3 | Li₂O |
| 0,2 - 0,3 | CeO₂ |
| 0,1 - 0,2 | F₂ |
| Rest | SiO₂ |

Der Gehalt an SiO₂ beträgt konkret 62-66Gew.-%. Die Glasfasern sind in an sich bekannter Weise zur Bildung eines Faserverbundwerkstoffes in eine Kunststoffmatrix, bspw. aus Epoxidharz, eingebettet. Die Fasern können als Gewebe oder als Gelege vorliegen. Zum Herstellungsverfahren wird auf die vorstehenden Erläuterungen verwiesen. Die Glasfaserwaben werden im Zusammenhang mit einem Wabenkern bzw. einer wabenartigen Kernschicht, im Zusammenhang mit einem Bauteil aus einem Wabenverbundwerkstoff und konkret im Zusammenhang mit dem vorstehend beschriebenen Laufboden offenbart.

Der Vorteil dieser Fasern besteht darin, dass diese ein Elastizitätsmodul von 100,0 GPa sowie eine sehr gute Wasserbeständigkeit und eine sehr gute Säurebeständigkeit aufweisen.

### Bezugszeichenliste

- 10: Laufboden
- 11: Kernschicht
- 12a: erste Deckschicht
- 12b: zweite Deckschicht
- 13: spall liner
- 14: Fußbodenbelag
- 15: dämpfende Schicht

## Patentansprüche

1. Laufboden für ein gepanzertes Fahrzeug, gepanzertes Fahrzeug mit einem derartigen Laufboden und Verfahren zur Herstellung eines derartigen Laufbodens Neue Ansprüche 1. Laufboden für ein gepanzertes Fahrzeug mit einem Doppelboden zum Schutz vor Minenexplosionen, wobei der Laufboden eine Verbundplatte (10) mit wenigstens einer Kernschicht (11) die zwischen einer ersten und einer zweiten Deckschicht (12a, 12b) angeordnet und mit diesen verbunden ist, wobei die Verbundplatte (10) im Fahrzeuginneren einsetzbar ist,
**dadurch gekennzeichnet,**
**dass** die wenigstens eine Kernschicht (11) eine wabenförmige Struktur aufweist, dass in der Verbundplatte (10) Haltemittel zur Verbindung der Verbundplatte (10) mit dem Fahrzeug integriert sind, wobei der Laufboden (5) abschnittsweise mit einem Befestigungselement des Fahrzeugs derart verbindbar ist, so dass im verbundenen Zustand nicht mit dem Befestigungselement des Fahrzeugs verbundene Abschnitte des Laufbodens (5) bei einer Minenexplosion schwingfähig sind, wobei die kürzeren und quer zur Längsachse des Fahrzeugs angeordneten Seiten des Laufbodens (5) fest mit dem Befestigungselement verbindbar und die längeren und sich in Längsrichtung des Fahrzeugs erstreckenden Seiten des Laufbodens (5) frei anordbar sind.

2. Laufboden nach Anspruch 1,
**dadurch gekennzeichnet, dass**
die Kernschicht (11) Glasfaserwaben, Metallwaben, insbesondere Aluminiumwaben, oder Aramidwaben oder Kohlenstofffaserwaben aufweist.

3. Laufboden nach Anspruch 1 oder 2,
**dadurch gekennzeichnet, dass**
die erste und zweite Deckschicht (12a, 12b) aus demselben oder aus verschiedenen Materialien gebildet sind.

4. Laufboden nach einem der vorhergehenden Ansprüche,
**dadurch gekennzeichnet, dass**
die erste und/oder zweite Deckschicht (12a, 12b) ein Glasfaserlaminat, ein Kohlenstofffaserlaminat, eine Aramidschicht, eine Keramikschicht oder ein Metallblech aufweist.

5. Laufboden nach einem der vorhergehenden Ansprüche 1 bis 4,
**dadurch gekennzeichnet, dass**
eine der Deckschichten (12a, 12b), insbesondere die im Gebrauch freundseitig angebrachte Deckschicht (12a, 12b) mit einem Spall liner (13) zum Schutz vor Splittern verbunden ist.

6. Laufboden nach Anspruch 5,
**dadurch gekennzeichnet, dass**
der spall liner (13) aus Aramid oder UHMWPE gebildet ist und/oder eine Gummierung aufweist.

7. Laufboden nach einem der vorhergehenden Ansprüche,
**dadurch gekennzeichnet, dass**
die im Gebrauch freundseitig angeordnete Seite der Verbundplatte (10) einen rutschfesten Fussbodenbelag (14) aufweist.

8. Laufboden nach einem der Ansprüche 5 bis 7,
**dadurch gekennzeichnet, dass**
eine dämpfende Schicht (15), insbesondere aus einem Gel, Schaumstoff oder Gummi, auf dem spall liner (13) oder auf einer der Deckschichten (12a, 12b) angeordnet ist.

9. Laufboden nach einem der vorhergehenden Ansprüche,
**dadurch gekennzeichnet, dass**
die Haltemittelinserts und/oder Pottings und/oder Profile umfassen, die in die Verbundplatte (10) eingelassen sind.

10. Laufboden nach einem der vorhergehenden Ansprüche,
**dadurch gekennzeichnet, dass**
die Deckschichten (12a, 12b) und die Kernschicht (11) durch einen Klebefilm verbunden sind, wobei zur Einstellung eines grossen Meniskus an der Grenzfläche zwischen der Deckschicht (12a, 12b) und einer Wabe der Kernschicht (11) der Klebefilm ein Flächegewicht von mindestens 100 g/m<2> aufweist.

11. Laufboden nach einem der Ansprüche 4 bis 9,
**dadurch gekennzeichnet, dass**
das Glasfaserlaminat einen Thermoplast-Klebefilm mit einem Flächengewicht von 5 - 300 g/m<2> und eine Shore Härte von 25 - 200 A aufweist.

12. Laufboden nach einem der Ansprüche 4 bis 10,
**dadurch gekennzeichnet, dass**
die Faserdicke des Glasfaserlaminats wenigstens der doppelten Klebefilmdicke entspricht.

13. Laufboden nach einem der Ansprüche 4 bis 11,
**dadurch gekennzeichnet, dass**
die Klebefilmdicke 5 - 250 pm beträgt.

14. Laufboden nach einem der vorhergehenden Ansprüche,
**dadurch gekennzeichnet, dass**
das Befestigungselement als ein Rahmen ausgebildet ist.

15. Gepanzertes Fahrzeug mit einem Laufboden nach Anspruch 1 und einem Minenschutzboden, wobei der Laufboden vom Minenschutzboden beabstandet und oberhalb des Minenschutzbodens angeordnet ist.

16. Fahrzeug nach Anspruch 15,
**dadurch gekennzeichnet, dass**
der Laufboden und der Minenschutzboden einen durch eine Minenexplosion komprimierbaren Zwischenraum bilden, der mit Luft gefüllt ist.

17. Fahrzeug nach Anspruch 15 oder 16,
**dadurch gekennzeichnet, dass**
der Laufboden mit einem Befestigungselement des Fahrzeugs verbunden ist derart, dass der Laufboden bei einer Minenexplosion schwingfähig ist.

18. Fahrzeug nach Anspruch 16,
**dadurch gekennzeichnet, dass**
wenigstens zwei gegenüberliegende Seiten des Laufbodens mit dem Befestigungselement zur Übertragung von Kräften verbunden sind und wenigstens zwei weitere gegenüberliegende Seiten des Laufbodens frei angeordnet sind derart, dass der Laufboden bei einer Minenexplosion schwingfähig ist.

19. Verfahren zur Herstellung eines Laufbodens für ein gepanzertes Fahrzeug, bei dem zur Herstellung einer Verbundplatte (10) eine Kernschicht (11) aus einer wabenförmigen Struktur beidseitig mit einer ersten und zweiten Deckschicht (12a, 12b) verbunden und die Verbundplatte (10) an die Form des Innenraums des Fahrzeugs angepasst wird, wobei die Verbundplatte (10) im Fahrzeuginneren einsetzbar ist, wobei Haltemittel zur Verbindung der Verbundplatte (10) mit dem Fahrzeug in die Verbundplatte (10) integriert werden, und wobei der Laufboden (5) abschnittsweise mit einem Befestigungselement des Fahrzeugs derart verbindbar ist, so dass im verbundenen Zustand nicht mit dem Befestigungselement des Fahrzeugs verbundene Abschnitte des Laufbodens (5) bei einer Minenexplosion schwingfähig sind, die kürzeren und quer zur Längsachse des Fahrzeugs angeordneten Seiten des Laufbodens (5) fest mit dem Befestigungselement verbunden und die längeren und sich in Längsrichtung des Fahrzeugs erstreckenden Seiten des Laufbodens (5) frei angeordnet sind.

## Claims

1. Walking floor for an armored vehicle with a double floor to protect against mine explosions,
wherein the walking floor a composite panel (10) having at least one core layer (11) which is arranged between a first and a second outer layer (12a, 12b) and is connected thereto, wherein the composite panel (10) can be used in the vehicle interior, **characterized in that** the at least one core layer (11) has a honeycomb structure, **in that** retaining means for connecting the composite panel (10) to the vehicle are integrated in the composite panel (10), wherein the walking floor (5) can be connected in sections to a securing element in the vehicle, such that sections of the walking floor (5), which are not connected to the securing element in the vehicle, in the connected state, are capable of vibrating during a mine explosion, wherein the shorter sides of the walking floor (5), which are arranged transversely with respect to the longitudinal axis of the vehicle, can be fixedly connected to the securing element and the longer sides of the walking floor (5), which extend in the longitudinal direction of the vehicle, can be freely disposed.

2. Walking floor according to Claim 1,
**characterized in that**
the core layer (11) comprises glass fiber honeycombs, metal honeycombs, particularly aluminum honeycombs, aramid honeycombs or carbon fiber honeycombs.

3. Walking floor according to Claim 1 or 2,
**characterized in that**
the first and second outer layer (12a, 12b) are formed from the same or different materials.

4. Walking floor according to one of the preceding claims,
**characterized in that**
the first and/or second outer layer (12a, 12b) comprise a fiberglass laminate, a carbon fiber laminate, an aramid layer, a ceramic layer or a metal sheet.

5. Walking floor according to one of the preceding Claims 1 to 4,
**characterized in that**
one of the outer layers (12a, 12b), particularly the outer layer (12a, 12b) disposed on the friendly side during use, is connected to a spall liner (13) to guard against fragments.

6. Walking floor according to Claim 5,
**characterized in that**
the spall liner (13) is formed from aramid or UHMWPE and/or has a rubber coating.

7. Walking floor according to one of the preceding claims,
**characterized in that**
the side of the composite panel (10) disposed on the friendly side during use exhibits an anti-slip floor covering (14).

8. Walking floor according to one of Claims 5 to 7,
**characterized in that**
an attenuating layer (15), particularly made from a gel, foam or rubber, is disposed on the spall liner (13) or on one of the outer layers (12a, 12b).

9. Walking floor according to one of the preceding claims,
**characterized in that**
the retaining means comprise inserts and/or pottings and/or profiles, which are inserted in the composite panel (10).

10. Walking floor according to one of the preceding claims,
**characterized in that**
the outer layers (12a, 12b) and the core layer (11) are connected by an adhesive film, wherein the adhesive film exhibits a surface weight of at least 100 g/m² in order to set a large meniscus on the boundary surface between the outer layer (12a, 12b) and a honeycomb of the core layer (11).

11. Walking floor according to one of Claims 4 to 9,
**characterized in that**
the fiberglass laminate comprises a thermoplastic adhesive film with a surface weight of 5 - 300 g/m² and a Shore hardness of 25 - 200 A.

12. Walking floor according to one of Claims 4 to 10,
**characterized in that**
the fiber thickness of the fiberglass laminate corresponds to at least twice the adhesive film thickness.

13. Walking floor according to one of Claims 4 to 11,
**characterized in that**
the adhesive film thickness is 5 - 250 pm.

14. Walking floor according to one of the preceding claims,
**characterized in that**
the securing element is configured as a frame.

15. Armored vehicle with a walking floor according to Claim 1 and an anti-mine protection floor, wherein the walking floor is disposed spaced apart from the anti-mine protection floor and above the anti-mine protection floor.

16. Vehicle according to Claim 15,
**characterized in that**
the walking floor and the anti-mine protection floor create an intermediate air-filled space which can be compressed by a mine explosion.

17. Vehicle according to Claim 15 or 16,
**characterized in that**
the walking floor is connected to a securing element in the vehicle, such that the walking floor is capable of vibrating during a mine explosion.

18. Vehicle according to Claim 16,
**characterized in that**
at least two opposite sides of the walking floor are connected to the securing element for the transmission of forces and at least two further opposite sides of the walking floor are freely disposed, such that the walking floor is capable of vibrating in the event of a mine explosion.

19. Method of producing a walking floor for an armored vehicle, in which for the production of a composite panel (10), a core layer (11) made of a honeycomb structure is connected on both sides to a first and second outer layer (12a, 12b) and the composite panel (10) is adapted to the shape of the vehicle interior, wherein the composite panel (10) can be used in the vehicle interior, wherein retaining means for connecting the composite panel (10) to the vehicle are integrated in the composite panel (10), and wherein the walking floor (5) can be connected in sections to a securing element in the vehicle, such that sections of the walking floor (5), in the connected state, are capable of vibrating during a mine explosion, the shorter sides of the walking floor (5), which are arranged transversely with respect to the longitudinal axis of the vehicle, are fixedly connected to the securing element and the longer sides of the walking floor (5), which extend in the longitudinal direction of the vehicle, are freely disposed.

## Revendications

1. Plancher intérieur pour un véhicule blindé avec un double plancher pour protéger contre les explosions de mines,
le plancher intérieur un panneau composite (10) ayant au moins une couche centrale (11) qui est disposée entre une première et une deuxième couche extérieure (12a, 12b) et est reliée à celles-ci, le panneau composite (10) pouvant être inséré à l'intérieur du véhicule,
**caractérisé**
**en ce que** l'au moins une couche centrale (11) a une structure en nid d'abeilles, en ce que des moyens de retenue pour relier le panneau composite (10) au véhicule sont intégrés dans le panneau composite (10), le plancher intérieur (5) pouvant être relié en partie à un élément de fixation dans le véhicule, de telle sorte que des sections du plancher intérieur (5), qui ne sont pas reliées à l'élément de fixation dans le véhicule, dans l'état relié, sont capable de vibrer lors de l'explosion d'une mine, les côtés plus courts du plancher intérieur (5), qui sont disposés transversalement par rapport à l'axe longitudinal du véhicule, pouvant être reliés de manière fixe à l'élément de fixation et les côtés plus longs du plancher intérieur (5), qui s'étendent dans la direction longitudinale du véhicule, pouvant être disposés librement.

2. Plancher intérieur selon la revendication 1,
**caractérisé**
**en ce que** la couche centrale (11) comprend des nids d'abeilles en fibres de verre, des nids d'abeilles métalliques, en particulier des nids d'abeilles en aluminium, des nids d'abeilles en aramide ou des nids d'abeilles en fibres de carbone.

3. Plancher intérieur selon la revendication 1 ou 2,
**caractérisé**
**en ce que** la première et la deuxième couche extérieure (12a, 12b) sont formées à partir de matériaux identiques ou différents.

4. Plancher intérieur selon une des revendications précédentes,
**caractérisé**
**en ce que** la première et/ou la deuxième couche extérieure (12a, 12b) comprennent un stratifié de fibres de verre, un stratifié de fibres de carbone, une couche d'aramide, une couche de céramique ou une tôle métallique.

5. Plancher intérieur selon une des revendications 1 à 4 précédentes,
**caractérisé**
**en ce que** une des couches extérieures (12a, 12b), en particulier la couche extérieure (12a, 12b) disposée sur le côté d'accueil à l'usage, est reliée à une doublure anti-éclats (13) pour protéger contre les fragments.

6. Plancher intérieur selon la revendication 5,
**caractérisé**
**en ce que** la doublure anti-éclats (13) est formée à partir d'aramide ou d'UHMWPE et/ou a un revêtement de caoutchouc.

7. Plancher intérieur selon une des revendications précédentes,
**caractérisé**
**en ce que** le côté du panneau composite (10) disposé sur le côté d'accueil à l'usage présente un revêtement de sol antidérapant (14).

8. Plancher intérieur selon une des revendications 5 à 7,
**caractérisé**
**en ce que** une couche d'atténuation (15), en particulier formée à partir d'un gel, de mousse ou de caoutchouc, est disposée sur la doublure anti-éclats (13) ou sur une des couches extérieures (12a, 12b).

9. Plancher intérieur selon une des revendications précédentes,
**caractérisé**
**en ce que** les moyens de retenue comprennent des inserts et/ou des matériaux d'imprégnation et/ou des profilés, qui sont insérés dans le panneau composite (10).

10. Plancher intérieur selon une des revendications précédentes,
**caractérisé**
**en ce que** les couches extérieures (12a, 12b) et la couche centrale (11) sont reliées par un film adhésif, le film adhésif présentant un poids surfacique d'au moins 100 g/m² afin d'établir un grand ménisque sur la surface de séparation entre la couche extérieure (12a, 12b) et un nid d'abeilles de la couche centrale (11).

11. Plancher intérieur selon une des revendications 4 à 9,
**caractérisé**
**en ce que** le stratifié de fibres de verre comprend un film adhésif thermoplastique avec un poids surfacique de 5-300 g/m² et une dureté Shore de 25-200 A.

12. Plancher intérieur selon une des revendications 4 à 10,
**caractérisé**
**en ce que** l'épaisseur de fibres du stratifié de fibres de verre correspond à au moins deux fois l'épaisseur de film adhésif.

13. Plancher intérieur selon une des revendications 4 à 11,
**caractérisé**
**en ce que** l'épaisseur de film adhésif est de 5-250 pm.

14. Plancher intérieur selon une des revendications précédentes
**caractérisé**
**en ce que** l'élément de fixation est réalisé en forme de cadre.

15. Véhicule blindé avec un plancher intérieur selon la revendication 1 et un plancher de protection anti-mines, le plancher intérieur étant disposé à l'écart du plancher de protection anti-mines et au-dessus du plancher de protection anti-mines.

16. Véhicule selon la revendication 15,
**caractérisé**
**en ce que** le plancher intérieur et le plancher de protection anti-mines créent un espace intermédiaire rempli d'air qui peut être comprimé par l'explosion d'une mine.

17. Véhicule selon la revendication 15 ou 16,
**caractérisé**
**en ce que** le plancher intérieur est relié à un élément de fixation dans le véhicule, de telle sorte que le plancher intérieur est capable de vibrer pendant l'explosion d'une mine.

18. Véhicule selon la revendication 16,
**caractérisé**
**en ce qu'**au moins deux côtés opposés du plancher intérieur sont reliés à l'élément de fixation pour la transmission des forces et au moins deux autres côtés opposés du plancher intérieur sont disposés librement, de telle sorte que le plancher intérieur est capable de vibrer lors de l'explosion d'une mine.

19. Procédé de production d'un plancher intérieur pour un véhicule blindé, dans lequel pour la production d'un panneau composite (10), une couche centrale (11) constituée d'une structure en nid d'abeilles est reliée sur les deux côtés à une première et une deuxième couche extérieure (12a, 12b) et le panneau composite (10) est adapté à la forme de du véhicule, le panneau composite (10) pouvant être utilisé à l'intérieur du véhicule, des moyens de retenue pour relier le panneau composite (10) au véhicule étant intégrés dans le panneau composite (10), et le plancher intérieur (5) pouvant être relié en partie à un élément de fixation dans le véhicule, de telle sorte que des sections du plancher intérieur (5), qui ne sont pas reliées à l'élément de fixation dans le véhicule, dans l'état relié, sont capable de vibrer lors de l'explosion d'une mine, les côtés plus courts du plancher intérieur (5), qui sont disposés transversalement par rapport à l'axe longitudinal du véhicule, étant reliés de manière fixe à l'élément de fixation et les côtés plus longs du plancher intérieur (5), qui s'étendent dans la direction longitudinale du véhicule, étant disposés librement.
